(19) Europäisches Patentamt
European Patent Office
Office européen des brevets

(11) **EP 4 769 362 A2**

(12) **EUROPEAN PATENT APPLICATION**

(43) Date of publication:
**01.07.2026 Bulletin 2026/27**

(21) Application number: **25224720.0**

(22) Date of filing: **17.12.2025**

(51) International Patent Classification (IPC):
**G08G 1/01** *(2006.01)*      **G08G 1/14** *(2006.01)*
**G01S 17/931** *(2020.01)*      **G06V 20/58** *(2022.01)*
**G08G 1/0967** *(2006.01)*

(52) Cooperative Patent Classification (CPC):
**G08G 1/142; G01S 17/931; G06V 20/586;
G08G 1/0112; G08G 1/0129; G08G 1/0141;
G08G 1/096725; G08G 1/147**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 US 202418990387**

(71) Applicant: **Waymo LLC
Mountain View, CA 94043 (US)**

(72) Inventors:
• **LIU, Mark Minshee
Mountain View, CA 94043 (US)**
• **ZWIENER, Jakob Robert
Mountain View, CA 94043 (US)**
• **CHATHAM, Andrew
Mountain View, CA 94043 (US)**

(74) Representative: **Chettle, John Edward et al
Venner Shipley LLP
TIDE Bankside
8 Emerson Street
London SE1 9DU (GB)**

(54) **LIVE PARKING SPACE MONITORING AND PREDICTION IN FLEETS OF AUTOMOTIVE VEHICLES**

(57)    The disclosed systems and techniques are directed to tracking and predicting live availability of parking resources by a fleet of vehicles. The disclosed techniques include receiving communications vehicles of a fleet with identification of object(s) located at an edge of a driving environment and edge visibility data for the edge from sensing systems of the vehicles, updating a map of live parking space occupancy for the driving environment with the received identification and the edge visibility data, determining, based on the updated map of live parking space occupancy and a historical parking space availability, a likelihood value associated with a parking space in the driving environment remaining unoccupied within a target time, and directing a vehicle of the fleet to the parking space based at least on the likelihood value.

**FIG. 3**

EP 4 769 362 A2

## Description

## TECHNICAL FIELD

The instant specification generally relates to autonomous vehicles. More specifically, the instant specification relates to detection of shared public resources, such as parking spaces, in automotive environments.

## BACKGROUND

An autonomous (fully or partially autonomous) vehicle (AV) operates by sensing an outside environment with various electromagnetic (e.g., radar and optical) and non-electromagnetic (e.g., audio and humidity) sensors. Some autonomous vehicles chart a driving path through the environment based on the sensed data. The driving path can be determined based on Global Navigation Satellite System (GNSS) data and road map data. While the GNSS and the road map data can provide information about static aspects of the environment (buildings, street layouts, road closures, etc.), dynamic information (such as information about other vehicles, pedestrians, street lights, etc.) is obtained from contemporaneously collected sensing data. Precision and safety of the driving path and of the speed regime selected by the autonomous vehicle depend on timely and accurate identification of various objects present in the outside environment and on the ability of a driving algorithm to process the information about the environment and to provide correct instructions to the vehicle controls and the drivetrain.

## BRIEF DESCRIPTION OF THE DRAWINGS

The present disclosure is illustrated by way of examples, and not by way of limitation, and can be more fully understood with references to the following detailed description when considered in connection with the figures, in which:

FIG. 1 is a diagram illustrating components of an example autonomous vehicle (AV) capable of deploying systems that predict presence of target objects in occluded areas of driving environments, in accordance with some implementations of the present disclosure.

FIG. 2 is a diagram illustrating example data flow of operations directed to tracking and predicting live availability of shared resources by a fleet of vehicles, in accordance with some implementations of the present disclosure.

FIG. 3 illustrates an example driving scene that can be sensed by one or more agents of a fleet of autonomous vehicles as part of tracking live availability of parking spaces, in accordance with some implementations of the present disclosure.

FIG. 4 illustrates an example method of tracking and predicting live availability of parking resources performed by a fleet server of a fleet of autonomous vehicles, in accordance with some implementations of the present disclosure.

FIG. 5 illustrates an example method of tracking and predicting live availability of parking resources performed by an autonomous vehicle of a fleet of autonomous vehicles, in accordance with some implementations of the present disclosure.

FIG. 6 depicts a block diagram of an example computer device capable of tracking and predicting live availability of parking resources performed by a fleet server of a fleet of autonomous vehicles, in accordance with some implementations of the present disclosure.

## SUMMARY

In one implementation, disclosed is a system that includes a memory device and a processing device communicatively coupled to the memory device. The processing device is to receive a plurality of communications, each of the plurality of communications received from a respective autonomous vehicle of a fleet of autonomous vehicles and including at least (i) an identification of one or more objects located at an edge of a drivable portion of a driving environment and (ii) edge visibility data representative of visibility of the edge of the drivable portion of the driving environment from a sensing system of the respective autonomous vehicle. The processing device is further to update a map of live parking space occupancy for the driving environment with at least the identification of the one or more objects and the edge visibility data and determine, based at least on the updated map of live parking space occupancy and a historical parking space availability in the driving environment, a first likelihood value associated with a first parking space in the driving environment remaining unoccupied within a target time. The processing device is further to direct a first autonomous vehicle of the fleet to the first parking space based at least on the first likelihood value.

In another implementation, disclosed is an autonomous vehicle that includes a sensing system to collect sensing data characterizing a driving environment of the autonomous vehicle. The autonomous vehicle further includes a data processing system to generate, using the sensing data, at least (i) an identification of one or more objects located at an edge of a drivable portion of the driving environment and (ii) edge visibility data representative of visibility of the edge of the drivable portion of the driving environment. The autonomous vehicle further includes a transceiver to communicate, to a fleet server, at least the identification of the one or more objects and the edge visibility data and receive, from the fleet server, an identification of a first parking space in the driving environment. The autonomous vehicle further includes a vehicle control system to cause the autonomous vehicle to travel to the first parking space.

In yet another implementation, disclosed is a fleet of vehicles, including a plurality of vehicles, each of the plurality of vehicles to collect, using a sensing system of a respective vehicle of the plurality of vehicles, sensing data characterizing a driving environment of the respective vehicle and generate, using a data processing system of the respective vehicle and the sensing data, curb occupancy data. The curb occupancy data includes at least (i) an identification of one or more objects located at a curb in the driving environment and (ii) curb visibility data representative of visibility of the curb in the driving environment. The fleet of vehicles further includes a processing device to update a map of live parking space occupancy with the curb occupancy data generated by the plurality of vehicles and determine, based at least on the updated map of live parking space occupancy and a historical parking space availability in the driving environment, a first likelihood value associated with a first parking space remaining unoccupied within a target time. The processing device is further to direct a first vehicle of the plurality of vehicles to the first parking space based at least on the first likelihood value. The first vehicle of the plurality of vehicles is then to travel to the first parking space.

## DETAILED DESCRIPTION

An autonomous vehicle (AV) or a vehicle deploying various driver assistance features can use multiple sensor modalities to facilitate detection and identification of objects in the driving environments and tracking trajectories of these objects. Sensors can include radio detection and ranging (radar) sensors, light detection and ranging (lidar) sensors, multiple digital cameras, sonars, geolocation sensors, positional sensors, and the like. Different types of sensors can provide different and complementary benefits. For example, radars and lidars emit electromagnetic signals (radio signals or optical signals) that reflect from the objects and carry back information about distances to the objects (e.g., from the time of flight of the signals) and velocities of the objects (e.g., from the Doppler shift of the frequencies of the reflected signals). Radars and lidars can scan an entire 360-degree view by using a series of consecutive sensing frames. Sensing frames can include numerous reflections covering the outside environment in a dense grid of return points. Each return point can be associated with the distance to the corresponding reflecting object and a radial velocity (a component of the velocity along the line of sight) of the reflecting object.

Lidars, by virtue of their sub-micron optical wavelengths, have high spatial resolution, which allows obtaining many closely spaced return points from the same object. This enables accurate detection and tracking of objects once the objects are within the reach of lidar sensors. Lidars have an operating range of 150-350 m, depending on a specific lidar model, with higher ranges typically achieved by more powerful and expensive systems.

Radar sensors are inexpensive, require less maintenance than lidar sensors, have a large working range of distances, and have a good tolerance of adverse weather conditions. As a result of much longer (radio) wavelengths used by radars, resolution of radar data is much lower than that of lidars. In particular, while radars are capable of accurate determination of velocities of objects moving with not too small velocities (relative to the radar receiver), detecting accurate locations of objects can be often problematic.

Cameras (e.g., photographic or video cameras) can acquire high resolution images at both shorter distances (where lidars operate) and longer distances (where lidars do not reach. Cameras capture two-dimensional projections of the three-dimensional outside space onto an image plane (or some other non-planar imaging surface). Cameras have a longer, than lidars, operating range but determine positions of objects with a higher error along the radial direction compared with the lateral directions.

Camera and lidar images (as well as radar images, in some applications) can be processed by various object detection models, including deep learning neural network models. Such models can determine positions and orientations of objects and evolution of the positions and orientations of the objects with time. These models can further classify the objects by type (e.g., truck, car, school bus, motorcyclist, pedestrian, and/or the like), manufacturer, model, and/or the like.

Autonomous vehicles, especially those used in urban environments, often have to park (in what is sometimes referred to as offhail parking) between driving missions, e.g., between passenger rides, to reduce operational costs and/or not to contribute to traffic during the time of inactivity. Finding locations for offhail parking can be difficult in busy urban environments where parking spaces that are available at a given time may become occupied soon thereafter. As a result, autonomous vehicles may have to drive additional distances incurring costs in fuel, vehicle wear, and/or the like, while also likely contributing to traffic congestions.

Aspects and implementations of the instant disclosure address these and other challenges of the existing autonomous driving technology by providing for systems and techniques capable of more efficient identification of unoccupied parking spaces. In particular, in some implementations, autonomous vehicles can be deployed as part of a large fleet of vehicles capable of exchanging live information about a driving environment among multiple vehicles of the fleet. The disclosed techniques are scalable with a number of vehicles in such fleet. More specifically, individual vehicles of the fleet and/or other object (e.g., stationary sensing devices) participating in collection of data (also referred to as fleet agents or simply agents herein) of a fleet can obtain sensor data (e.g., lidar data, radar data, camera data, sonar data, and/or the like) representative of parking availability, including (but not limited to) locations and type of objects parked or stopped near a side or edge of a street or other roadway. An edge of street/roadway is often referred to as a curb herein irrespective of whether such edge is articulated with a physical curb, a change of the surface type (e.g., transition from pavement to grass, gravel, and/or the like), marked with paint markings, posts, and/or any other objects, indications, or semantics, and/or any combination thereof. An agent, having processed the live sensing data with one or more object detection models (e.g., computer vision machine learning models) may generate one or more feeds or signals of data that are transmitted to a fleet server that collects and manages data received from multiple agents. In one example, a first signal may include bounding shapes (e.g., bounding boxes) of vehicles or other objects (e.g., cargo containers, garbage disposers, etc.) detected at a curb and indicative of occupied curbside parking spaces. A second signal may include segments of the curb that are directly visible from the agent. Direct curb visibility can indicate that the parking spaces (or potential parking spaces, if legally permitted) at specific locations of the curb are unoccupied. A third signal can indicate the legal status of the curb, e.g., whether parking at the curb is permitted, forbidden, permitted at certain hours or for certain types of vehicles (e.g., taxis, delivery vehicles, etc.) and/or the like. This third signal can be generated based on detection of one or more traffic signs, road/curb markings, and/or the like by one or more computer vision models.

The fleet server can collect, from various agents, signals jointly representative of a status of segments of various curbs in the environment where the agents operate. The fleet server can generate, using the signals, a dynamic parking space occupancy map. For example, different agents can travel the same street(s) at different times (and/or direction) and collect information about various curb segments at those times. Although each agent can observe some curb segments and not observe other segments that are occluded (e.g., by other vehicles) from the agent's view, other vehicles can complement this information, e.g., by observing the same and/or different curb segments at the same and/or different times or at a different angle. Each observed curb segment can be identified in the dynamic occupancy map via the segment's ID, the most recent observation time, the status of the most recent observation, e.g., occupied (if an object was observed within the bounds of the segment), unoccupied (if the curb was visible across the length of the segment), or unknown (if no object was observed yet no view of the curb was available), and/or other pertinent information, e.g., legal status of the segment's ID (e.g., temporarily illegal, legal after 6 pm, etc.). The dynamic occupancy map can be updated once one of the agents communicates data, including data about segments previously not sensed and/or data updates about segments sensed earlier. In some implementations, agents can send updates to the fleet server at a rate at which new perception processing is performed by the agent, e.g., every 0.1 sec, every 0.2 sec, and/or the like. In some implementations, agents can send updates to the fleet server at a lower rate, while performing initial aggregation of sensing data over 5 sec, 10 sec, 20 sec, and/or the like. In some implementations, the dynamic occupancy map can be generated using a static map of known parking spaces preloaded into an agent's memory (and fleet server's memory) prior to the start of a driving mission. In some implementations, the map of parking spaces can itself be dynamic, updated using signals received from the agents based on perception (object recognition) performed by live agents, such as data indicating that some of the parking spaces have been blocked via temporary signs, cones, physical barriers, etc., or data indicating that some of the previously unavailable parking spaces are presently legal to occupy.

The map of parking spaces and the live parking occupancy map can be used to predict availability of parking at various locations in the driving environment. For example, a predictor model operating on the fleet server can use the live parking occupancy map as a first input. A second input can include historical parking space occupancy, as detected during previous driving missions of the vehicles of the fleet. (As new data is being sent to the fleet server, the historical occupancy data can be continuously updated.) The second input indicates to the predictor model how likely a parking space that is currently available can nonetheless be taken away before a fleet vehicle reaches that space. In some implementations, the predictor model can receive a third input that includes a historical success rate for the parking space. The third input can further indicate to the predictor model whether the parking space is likely to remain unoccupied. In some implementations, historical occupancy and/or success rate can be subdivided into multiple time bins, e.g., 6-8 am, 8-10 am, 10 am-2 pm, etc., days of the week (e.g., workdays vs. weekends, etc.) the occupancy/success rate being tracked for each time bin individually. In some implementations, the occupancy and/or success rate can be correlated with one or more events, e.g., a sports game, a concert, etc., taking place at a nearby area at about the same time, and/or the like. Once one or more fleet vehicles are about to park (e.g., following completion of a driving mission with no immediate next mission scheduled), the predictor model can evaluate several metrics for various parking spaces, including (but not limited to) the information in the aforementioned inputs, distance from the fleet vehicle(s) to the parking space, the length of the available curb segments (continuous or interrupted) near a given parking space, the density of the traffic in relevant area, a likely starting area for the next driving mission, and/or the like. The predictor model can select an optimal parking space for the vehicle(s) by weighting the closeness of a parking space to the current location of a fleet vehicle and the likely starting area for the next driving mission against the likelihood that the parking space can be occupied by the time the vehicle arrives at that space. The optimal parking space selected by the predictor model can then be communicated to the vehicle. The vehicle can drive to the parking space and attempt to park there. The vehicle can then report back to the fleet server whether the parking attempt was successful or unsuccessful, and the fleet server can update the historical success rates. In those instances where the parking attempt was unsuccessful, the fleet server can identify another optimal parking space for the vehicle given the vehicle's new location. A vehicle responding to instructions from the fleet server and driving to the instructed parking space can still provide live occupancy data to the fleet server, as described above. In some implementations, when the vehicle following instructions from the fleet server and attempting to park observes an available parking space, the vehicle's own planning system can override the fleet server's instructions by abandoning the route to the parking space selected by the fleet server and parking at the observed available parking space instead.

Numerous other implementations are disclosed herein. The advantages of the disclosed techniques and systems include, but are not limited to, faster and more efficient identification of viable parking spaces and reduction in driving time and distances traveled by autonomous vehicles in search of offhail parking. The disclosed techniques include mechanisms for making onboard observations of street parking availability, sharing these observations with the rest of the fleet with low latency, and using aggregated fleetwide knowledge to improve parking decision-making. Implementation of the disclosed techniques has been shown to result in saving of about 10-20 hours of driving per vehicle per week (depending on a number of driving missions) in an urban driving environment (such as the environment of San Francisco).

In those instances where description of implementations refers to autonomous vehicles, it should be understood that similar techniques can be used in various driver assistance systems that do not rise to the level of fully autonomous driving systems. More specifically, disclosed techniques can be used in Level 2 driver assistance systems that implement steering, braking, acceleration, lane centering, adaptive cruise control, etc., as well as other driver support. Likewise, the disclosed techniques can be used in Level 3 driving assistance systems capable of autonomous driving under limited (e.g., highway) conditions. In such systems, sharing live parking data across a large fleet of vehicles and receiving instructions from the fleet server can be used to inform the driver of nearby parking space availability even in situations where the driver retains ultimate control over driving decisions.

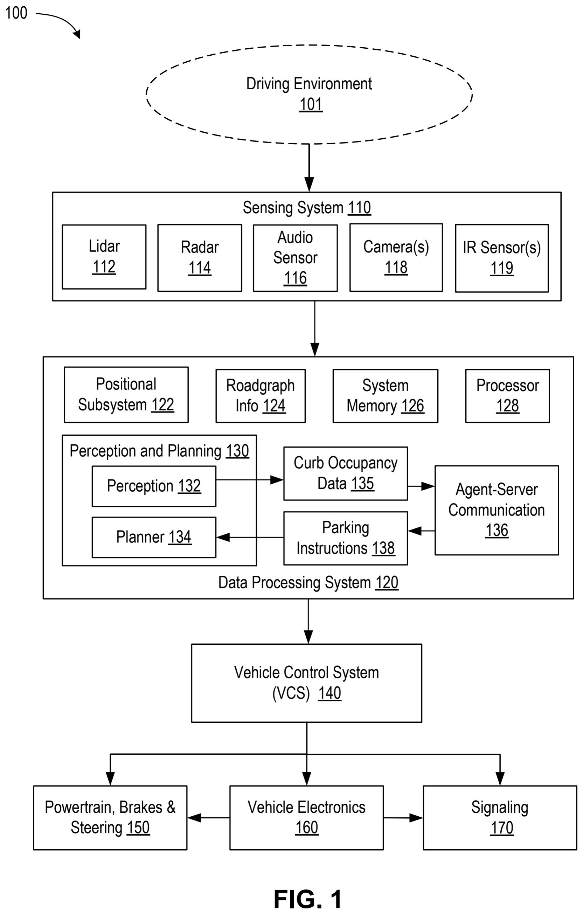

FIG. 1 is a diagram illustrating components of an example autonomous vehicle (AV) 100 that deploy systems and techniques capable of tracking and predicting live availability of shared resources by a fleet of autonomous vehicles, in accordance with some implementations of the present disclosure. Shared resources can include parking spaces, charging stations, and/or other shared road or automotive resources. Autonomous vehicles of a fleet can include motor vehicles (cars, trucks, buses, motorcycles, all-terrain vehicles, recreational vehicles, any specialized farming or construction vehicles, and the like), or any other self-propelled vehicles (e.g., robots, factory or warehouse robotic vehicles, sidewalk delivery robotic vehicles, etc.) capable of being operated in a self-driving mode (without a human input or with a reduced human input). "Objects," as referenced herein, can include any entity, item, device, body, or article (animate or inanimate) located outside the autonomous vehicle, such as roadways, buildings, trees, bushes, sidewalks, bridges, mountains, other vehicles, piers, banks, landing strips, animals, birds, or other things. "Agents," as referenced herein, refer to any devices-animate or stationary-that participate in data sharing, e.g., uploading live parking space occupancy data to a fleet server. Agents can include vehicles of the fleet, but can also include other devices (e.g., stationary sensing devices) capable of sensing any portion of a driving environment and live streaming of collected sensing data to the fleet server. Some vehicles can be agents whereas some other vehicles can receive instructions from the fleet server but not stream data to the fleet server. In some implementations, the fleet server can be physically separate from any of the vehicles and/or agent, e.g., implemented as a stationary server. In some implementations, the fleet server can be located on one of the vehicles and/or agents or distributed among multiple vehicles, agents, and/or stationary servers.

A driving environment 101 can also include any objects (animate or inanimate) located outside the AV, such as roadways, buildings, trees, bushes, sidewalks, bridges, mountains, other vehicles, pedestrians, and so on. The driving environment 101 can be urban, suburban, rural, and so on. In some implementations, the driving environment 101 can be an off-road environment (e.g., farming or other agricultural land). In some implementations, the driving environment can be an indoor environment, e.g., the environment of an industrial plant, a shipping warehouse, a hazardous area of a building, and so on. In some implementations, the driving environment 101 can be substantially flat, with various objects moving parallel to a surface (e.g., parallel to the surface of Earth). In other implementations, the driving environment can be three-dimensional and can include objects that are capable of moving along all three directions (e.g., balloons, leaves, etc.). Hereinafter, the term "driving environment" should be understood to include all environments in which an autonomous motion of self-propelled vehicles can occur. The objects of the driving environment 101 can be located at any distance from the AV, from close distances of several feet (or less) to several miles (or more).

As described herein, in a semi-autonomous or partially autonomous driving mode, even though the vehicle assists with one or more driving operations (e.g., steering, braking and/or accelerating to perform lane centering, adaptive cruise control, advanced driver assistance systems (ADAS), or emergency braking), the human driver is expected to be situationally aware of the vehicle's surroundings and supervise the assisted driving operations. In such driving mode(s), even though the vehicle may perform all driving tasks in certain situations, the human driver is expected to be responsible for taking control as needed.

Although, for brevity and conciseness, various systems and methods may be described below in conjunction with autonomous vehicles, similar techniques can be used in various driver assistance systems that do not rise to the level of fully autonomous driving systems. In the United States, the Society of Automotive Engineers (SAE) have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver assistance systems that implement steering, braking, acceleration, lane centering, adaptive cruise control, etc., as well as other driver support. The disclosed systems and methods can be used in SAE Level 3 (L3) driving assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving assistance systems, accurate assessment of the driving environment can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example AV 100 can be an agent of a fleet that collects live data related to parking availability and streams the collected data to a fleet server (not shown in FIG. 1). The example AV 100 can include a sensing system 110. The sensing system 110 can include various electromagnetic (e.g., optical) and non-electromagnetic (e.g., acoustic) sensing subsystems and/or devices. The sensing system 110 can include a radar 114 (or multiple radars 114), which can be any system that utilizes radio or microwave frequency signals to sense objects within the driving environment 101 of the AV 100. The radar(s) 114 can be configured to sense both the spatial locations of the objects (including their spatial dimensions) and velocities of the objects (e.g., using the Doppler shift technology). Hereinafter, "velocity" refers to both how fast the object is moving (the speed of the object) as well as the direction of the object's motion. The sensing system 110 can include a lidar 112, which can be a laserbased unit capable of determining distances to the objects and velocities of the objects in the driving environment 101. Each of the lidar 112 and radar 114 can include a coherent sensor, such as a frequency-modulated continuouswave (FMCW) lidar or radar sensor. For example, radar 114 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple lidars 112 or radars 114 can be mounted on AV 100.

Lidar 112 can include one or more light sources producing and emitting signals and one or more detectors of the signals reflected back from the objects. In some implementations, lidar 112 can perform a 360-degree scanning in a horizontal direction. In some implementations, lidar 112 can be capable of spatial scanning along both the horizontal and vertical directions. In some implementations, the field of view can be up to 90 degrees in the vertical direction (e.g., with at least a part of the region above the horizon being scanned with radar signals). In some implementations, the field of view can be a full sphere (consisting of two hemispheres).

The sensing system 110 can further include one or more cameras 118 to capture images of the driving environment 101. The images can be two-dimensional projections of the driving environment 101 (or parts of the driving environment 101) onto a projecting surface (flat or non-flat) of the camera(s). Some of the cameras 118 of the sensing system 110 can be video cameras configured to capture a continuous (or quasi-continuous) stream of images of the driving environment 101. The sensing system 110 can also include one or more infrared (IR) sensors 119. The sensing system 110 can further include one or more audio sensors 116, such as microphones, sonars, which can be ultrasonic sonars, and/or other audio sensors, in some implementations.

The sensing data obtained by the sensing system 110 can be processed by a data processing system 120 of AV 100. For example, the data processing system 120 can include a perception and planning system 130. The perception and planning system 130 can be configured to detect and track objects in the driving environment 101 and to classify (recognize) the detected objects, e.g., vehicles, pedestrians, animals, and/or the like. The perception and planning system 130 can also analyze images captured by the cameras 118 and can detect traffic light signals, road signs, roadway layouts (e.g., boundaries of traffic lanes, topologies of intersections, designations of parking places, and so on), presence of obstacles, and the like. The perception and planning system 130 can further receive radar sensing data (Doppler data and ToF data) to determine distances to various objects in the environment 101 and velocities (radial and, in some implementations, transverse, as described below) of such objects. In some implementations, the perception and planning system 130 can use radar data in combination with the data captured by the camera(s) 118.

Perception and planning system 130 can receive additional information from a positioning subsystem 122, which can include a GNSS transceiver and/or inertial measurement unit (IMU), configured to obtain information about the position of the AV relative to Earth and its surroundings. The positioning subsystem can use the positioning data, e.g., GNSS and IMU data) in conjunction with the sensing data to help accurately determine the location of the AV with respect to fixed objects of the driving environment 101 (e.g., roadways, lane boundaries, intersections, sidewalks, crosswalks, road signs, curbs, surrounding buildings, etc.) whose locations can be provided by roadgraph information 124. In some implementations, the data processing system 120 can receive non-electromagnetic data, such as audio data (e.g., ultrasonic sensor data, or data from a mic picking up emergency vehicle sirens), temperature sensor data, humidity sensor data, pressure sensor data, meteorological data (e.g., wind speed and direction, precipitation data), and the like.

Perception and planning system 130 can perform any number of tasks related to selecting and following a selected trajectory (driving path) of AV 100, including detection and tracking of objects in the driving environment, identifying status of traffic lights, traffic signs, road/lane markings, selecting a safe and legal trajectory for the AV 100, modifying the selected trajectory in view of changing driving conditions, and/or any performing various other tasks related to the motion of AV 100. Additionally, perception and planning system 130 can perform any number of tasks in conjunction with collecting and processing live data related to parking availability in a region of driving environment 101 observable by sensing system 110. In some implementations, collecting and processing parking availability data can be performed by the same modules and processes that perform various trajectory-associated tasks. In some implementations, collecting and processing parking availability data can be performed by specialized modules and processes that are dedicated to such tasks. In some implementations, perception and planning system 130 may include a perception module 132 that receives sensing data from sensing system 110 and generates curb occupancy data 135 indicative of what portions of curb are blocked with detected objects, what portions of curb are visible, at what portions of curb it is legal/illegal to park, and/or the like.

Curb occupancy data 135, suitably annotated with time stamps indicative of the time of data collection, can be provided to an agent-server communication module 136 that communicates the data to a fleet server. Agent-server communication module 136 can include a radio signal transmitter capable of transmitting modulated radio waves carrying (at least) curb occupancy data 135 and a radio signal receiver capable of receiving modulated radio waves carrying (at least) parking instructions 138, e.g., using one or more suitable radio communication protocols. In some implementations, transmitting and/or receiving radio waves can be performed by a transceiver that combines functions of the transmitter and the receiver.

In some implementations, curb occupancy data 135 can be streamed at regular time intervals, e.g., with frequency of 5 Hz, 10 Hz, and/or the like. In those instances where AV 100 is a vehicle that is about to park (e.g., following completion of a driving mission), agent-server communication module 136 may receive parking instructions 138 from the fleet server with identification of a parking space where the AV 100 is likely to park successfully. The identification (e.g., coordinates) of the parking space can be passed on to a planner module 134 of perception and planning system 130, and the planner module 134 can chart a driving trajectory for AV 100 to the identified parking space. In some implementations, e.g., where perception module 132 observes an available and legal parking space near AV 100, perception module 132 can issue parking instructions directly to planner module 134 without waiting for parking instructions 138 from the fleet server.

Various systems and subsystems of data processing system 120 can have software stored in one or more system memory 126 devices. System memory 126 can include any volatile or non-volatile memory devices, such as read-only memory (ROM), random-access memory (RAM), electrically erasable programmable read-only memory (EEPROM), flash memory, flip-flop memory, or any other device capable of storing data. RAM can be a dynamic random-access memory (DRAM), synchronous DRAM (SDRAM), a static memory, such as static random-access memory (SRAM), and the like. In some implementations, system memory 126 can be an on-chip memory.

Operations of data processing system 120 can be performed by one or more processors 128, which can include CPU(s), GPU(s), field-programmable gate arrays (FPGAs), application-specific integrated circuits (ASICs), and the like. "Processor" herein refers to a device capable of executing instructions encoding arithmetic, logical, or I/O operations, e.g., stored in system memory 126. In some implementations, processor(s) 128 and the system memory 126 can be implemented as a single controller, e.g., as a FPGA.

The data generated by the perception and planning system 130 and/or received via agent-server communication module 136 can be used by an autonomous driving system, such as a vehicle control system (VCS) 140. The VCS 140 can include one or more algorithms that control how AV is to behave in various driving situations and environments. For example, the VCS 140 can include a navigation system for determining a global driving route to a destination point. The VCS 140 can also include a driving path selection system for selecting a particular path through the immediate driving environment, which can include selecting a traffic lane, negotiating a traffic congestion, choosing a place to make a U-turn, selecting a trajectory for a parking maneuver, and so on. The VCS 140 can also include an obstacle avoidance system for safe avoidance of various obstructions (rocks, stalled vehicles, a jaywalking pedestrian, and so on) within the driving environment of the AV. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles.

Algorithms and modules of VCS 140 can generate instructions for various systems and components of the vehicle, such as the powertrain, brakes, and steering 150, vehicle electronics 160, signaling 170, and other systems and components not explicitly shown in FIG. 1. The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, inside lighting system, dashboard notification system, passenger notification system, radio and wireless network transmission systems, and so on. Some of the instructions outputted by the VCS 140 can be delivered directly to the powertrain, brakes, and steering 150 (or signaling 170) whereas other instructions output by the VCS 140 are first delivered to the vehicle electronics 160, which generates commands to the powertrain, brakes, and steering 150 and/or signaling 170.

In one example, parking instructions 138 received from the fleet server via agent-server communication module 136 (and/or parking instructions generated directly by planner module 134) can include coordinates of an identified available parking space, e.g., a street curb parking. In some implementations, the coordinates can be specified in relation to a reference grid of positional subsystem 122, and can include any suitable GNSS coordinates. In some implementations, the instructions can include a unique parking space identifier PSID assigned to a given parking space on a parking space map shared among the vehicles of the fleet. Having received the PSID and/or of coordinates the parking space, planner module 134 can find the corresponding parking space in roadgraph information 124, e.g., determine a particular street and a side of the street where the parking space is location, and can further identify a specific driving lane providing access to the parking space. Planner module 134 can then chart a driving path from the current location to the parking space and provide the charted driving path or route to VCS 140, e.g., by specifying various waypoints along the route, target speed to be maintained between the waypoints, and/or the like. The VCS 140 can output corresponding instructions to the powertrain, brakes, and steering 150 (directly or via the vehicle electronics 160), e.g., to (1) follow the provided driving path by controlling throttle settings, a flow of fuel to the engine, steering settings, and/or the like, (2) brake, downshift transmission into a lower gear, and (3) pull forward and/or backward into the parking space. Following a period of offhail parking, the VCS 140 can output instructions to the powertrain, brakes, and steering 150 to leave the parking space and follow a suitable trajectory associated with a new driving mission, as can be charted by the planner module 134, e.g., based on new instructions received from the fleet server.

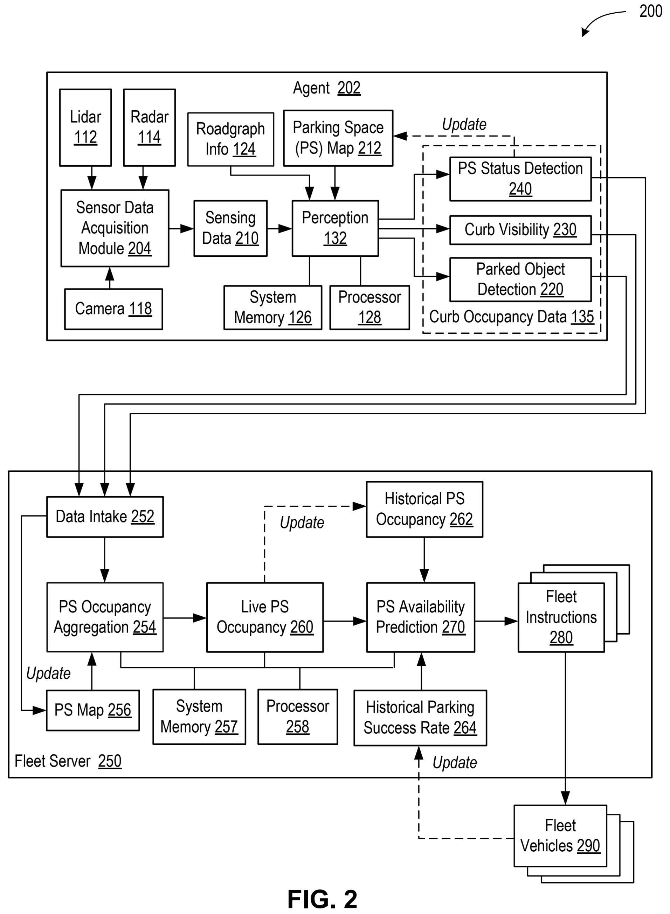

FIG. 2 is a diagram illustrating example data flow of operations 200 directed to tracking and predicting live availability of shared resources by a fleet of vehicles, in accordance with some implementations of the present disclosure. Shared resources can include parking spaces, charging stations, and/or other shared road or automotive resources. The fleet illustrated schematically in FIG. 2 can include one or more agents 202 and one or more fleet servers 250 (one fleet server is shown, for conciseness). As illustrated, operations 200 can involve using sensing data 210 obtained by a sensing system of an agent 202 (e.g., sensing system 110 of FIG. 1), which can be an autonomous vehicle and/or a driver-operated vehicle. Sensing data 210 can be collected by any suitable sensors, e.g., lidar 112, radar 114, camera(s) 118, and/or audio sensor 116 (with reference to FIG. 1) and can be received via a sensor data acquisition module 204 receiving data obtained by one or more sensors. More specifically, sensor data acquisition module 204 can receive a sequence of camera images, e.g., two-dimensional projections of the driving environment (or a portion thereof) on an array of sensing detectors (e.g., charged coupled device or CCD detectors, complementary metal-oxide-semiconductor or CMOS detectors, and/or the like). Each camera image can have pixels of various intensities of one color (for black-and-white images) or multiple colors (for color images). The camera images can be panoramic images or images depicting a specific portion of the driving environment. The camera images can include a number of pixels. The number of pixels can depend on the resolution of the image. Each pixel can be characterized by one or more intensity values. A black-and-white pixel can be characterized by one intensity value, e.g., representing the brightness of the pixel, with value 1 corresponding to a white pixel and value 0 corresponding to a black pixel (or vice versa). The intensity value can assume continuous (or discretized) values between 0 and 1 (or between any other chosen limits, e.g., 0 and 255). Similarly, a color pixel can be represented by more than one intensity value, such as three intensity values (e.g., if the RGB color encoding scheme is used) or four intensity values (e.g., if the CMYK color encoding scheme is used). Camera images can be preprocessed, e.g., downscaled (with multiple pixel intensity values combined into a single pixel value), upsampled, filtered, denoised, and the like. Camera image(s) can be in any suitable digital format (JPEG, TIFF, GIG, BMP, CGM, SVG, and so on).

Sensor data acquisition module 204 can further receive lidar and/or radar data, which can include a set of return points (point cloud) corresponding to laser and/or radar beam reflections from various objects in the driving environment. Each return point can be understood as a data unit (pixel) that includes coordinates of reflecting surfaces, radial velocity data, intensity data, and/or the like. For example, sensor data acquisition module 204 can receive lidar (radar) data that includes intensity map $I$ $(R, \theta, \phi)$, where R, $\theta$, $\phi$ is a set of spherical coordinates. In some implementations, Cartesian coordinates, elliptic coordinates, parabolic coordinates, or any other suitable coordinates can be used instead. The intensity map identifies an intensity of the lidar (radar) reflections for various points in the field of view. The coordinates of objects (or surfaces of the objects) that reflect lidar (radar) signals can be determined from directional data (e.g., polar $\theta$ and azimuthal $\phi$ angles in the direction of lidar transmissions) and distance data (e.g., radial distance $R$ determined from the time of flight of lidar signals). The lidar and/or radar images can further include velocity data of various reflecting objects identified based on detected Doppler shift of the reflected signals. Although **FIG. 2** illustrates an implementation in which three modalities of data are being used, one or more data modalities can be absent (or disabled) in some implementations. For example, the camera data modality and the lidar (or radar) data modality can be used while the radar data modality (or lidar data modality) is not used.

The camera images, lidar data, and/or radar data can be large images (sets of data) of the entire driving environment or images of a significant portion of the driving environment (e.g., camera image acquired by a forward-facing camera(s) of the vehicle's sensing system). The acquired camera, lidar, and/or radar images can be combined into sensing frames associated with specific times of acquisition, e.g., as can be represented via timestamps. In some implementations, different sensors can acquire images at different rates, e.g., lidar images can be acquired at the rate of 50 Hz, camera images can be acquired at the rate of 24 Hz, radar images can be acquired at the rate of 10 Hz, and/or the like. Accordingly, in some implementations, frames of sensing data 210 can have the lowest rate (e.g., 10 Hz) with the higher-rate sensing data aggregated across multiple frames (e.g., with 5 lidar images aggregated and combined with one radar image). In some implementations, frames of sensing data 210 can have the highest rate (e.g., 50 Hz) with the lower-rate sensing data used across multiple sensing frames (e.g., with one radar image combined with 5 consecutive lidar sensing frames).

Frames of sensing data 210 can be processed by perception module 132 (e.g., a part of perception and planning system 130 in **FIG. 1**). Perception module 132 can include an object detection model, which can be a computer vision model (or a set of multiple models) trained to identify individual objects in the sensing data 210, e.g., vehicles, curbs, pedestrians, animals, road signs, buildings, structures, overpasses, and/or the like. In some implementations, the object detection model can output bounding boxes or any other bounding shapes (e.g., convex hulls) that enclose or otherwise indicate locations of various objects in the environment. The object detection model can further output types (labels) of the objects, e.g., "pedestrian," "vehicle," "traffic light," "road sign", and/or the like. Perception module 132 can also receive roadgraph information 124, which can include static (e.g., map) data for various drivable surfaces, such as roads, streets, lanes, driveways, and/or the like. For example, roadgraph information 124 can include a map of polylines corresponding to various driving lanes, lane turns, lane splits, lane merge, lane starts, lane ends, and/or the like. Perception module 132 can further receive an input from a parking space map 212, which can be (or include) a map of various known (e.g., from previous driving missions or from pertinent city records).

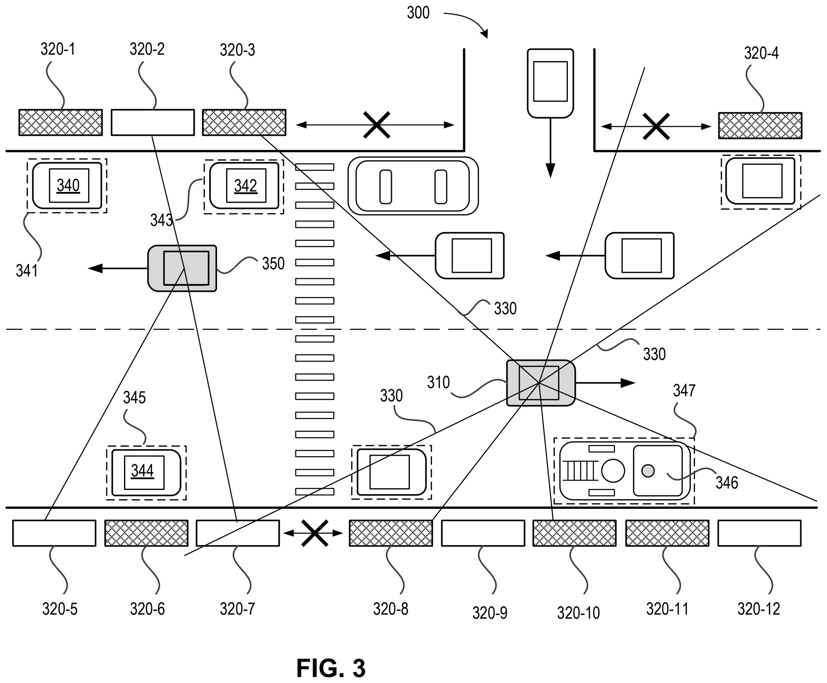

The perception module 132 can generate curb occupancy data 135 that includes a parked object detection signal 220 characterizing types and bounding shapes (e.g., bounding boxes, convex hulls, etc.) of vehicles or other objects located at a curb (e.g., any edge or boundary of a drivable surface). **FIG. 3** illustrates an example driving scene 300 that can be sensed by one or more agents of a fleet of autonomous vehicles as part of tracking live availability of parking spaces, in accordance with some implementations of the present disclosure. Driving scene 300 includes an agent 310 driving along a portion of a city street and collecting sensing data indicative of a live occupancy of one or more parking spaces 320-1... 320-12 indicated with rectangular boxes. Agent 310 can sense driving scene using one or more active sensing beams 330, e.g., lidar sensing beams, radar sensing beams, and/or the like (e.g., ultrasonic sensing beams). In some implementations, parking spaces 320-1... 320-12 can be identified in parking space map 212 (with reference to **FIG. 2**), e.g., via PSIDs, coordinates, and/or the like, or as curb segments where parking is legal. Additionally, the parking space map can identify curb segments where parking is not permitted, as indicated schematically with crosses and arrows.

Parked object detection signal 220 can include identifications of bounding shapes of various detected objects located near a curb of an area where parking is legally permitted. As illustration, **FIG. 3** depicts schematically bounding shapes 341, 343, and 345 drawn around parked cars 340, 342, and 344, respectively. **FIG. 3** also illustrates a bounding box 347 drawn around a stopped fire truck 346. Parked object detection signal 220 can identify bounding boxes (or other bounding shapes) by any suitable sets of parameters, such as, coordinates of the center of a box and the box's dimensions (e.g., length, width, and height, in some implementations) or any equivalents thereof. Parked object detection signal 220 (with reference to **FIG. 2**) can further identify parking spaces that are blocked by parked objects, e.g., parking spaces 320-1, 320-3, 320-4, 320-6, 320-8, 320-10, and 320-11, as *Occupied* spaces. Even though reference herein is made to parking spaces being blocked by parked objects, it should be understood that "parked objects," as used in this context, can also include stopped vehicles and/or any other stationary objects (objects having zero speed or close to zero speed).

In some implementations (with a continuing reference to **FIG. 2**), curb occupancy data 135 generated by perception module 132 can include a curb visibility signal 230. The curb visibility signal 230 can identify segments of the curb that are directly visible to a sensing system of the agent. For example, agent 310 in **FIG. 3** can directly observe a segment of the curb corresponding to parking space 320-9 and a shorter segment of the curb corresponding to parking space 320-9. Curb visibility signal 230 can identify any visible continuous portions of the curbs on either side of the street even when those portions are a fraction of a space capable of parking a vehicle. Curb visibility signal 230, therefore identifies curb segments as *Unoccupied* and, therefore, potentially available as parking locations. Some of the curb segments that are not identified as *Occupied* or *Unoccupied* can be classified as *Unknown.* For example, parking spaces 320-2, 320-5, and 320-12 for which no blocking objects are detected yet no curb is directly visible can be so classified.

In some implementations (with a continuing reference to **FIG. 2**), curb occupancy data 135 generated by perception module 132 can include a parking space status detection signal 240. Parking space status detection signal 240 can indicate legal status of various segments of visible curbs in the driving scene. For example, perception module 132 can use computer vision models to identify one or more road markings, curb markings, posted signs indicating whether parking at the curb is permitted, forbidden, permitted at certain hours or for certain types of vehicles (e.g., taxis, delivery vehicles, etc.) and/or the like. In some instances, parking space status detection signal 240 can determine that some parking spaces identified as legal by parking space map 212 are no longer available (or temporarily unavailable, e.g., because of construction, accident, etc.), as can be indicated with a "no parking" sign, a cone, a physical block, and/or the like. Conversely, parking space status detection signal 240 can determine that parking in some spaces identified as illegal by parking space map 212 is now legal, e.g., a previous "no parking" sign has been removed. In such instances, where a mismatch between parking space status detection signal 240 signal and parking space map 212, the latter can be updated with the live information in the signal.

Parked object detection 220 signal, curb visibility signal 230, and/or parking space status detection signal 240 signal can be communicated to a fleet server 250. The fleet server 250 can collect, via a data intake module 252, the signals from various agents and generate a live (dynamic) parking space occupancy 260, e.g., by performing parking space occupancy aggregation 254 using data from various agents to determine the status of the driving environment as a whole in which multiple agents of the fleet operate. In some instances, different agents can travel the same street(s) at different instances of time and collect information about various curb segments at such instances. For example, with reference to **FIG. 3,** while agent 310 cannot directly observe parking spaces 320-2 and 320-5 and has a limited view of parking space 320-7, another agent 350 can have a better view of those spaces.

Live parking space occupancy 260 can include entries for various parking spaces and/or curb segments defined in a stored parking space map 256 and any additional parking spaces identified by live processing by the perception modules of various agents of the fleet. Individual curb segments can be identified by the segment's PSID, the time of the last observation of the segment, the status of the last observation, e.g., *Occupied* (if the segment was blocked by a stationary object), *Unoccupied* (the segment has a curb visible to agent(s)), or *Unknown* (no blocking object or visible curb). Additionally, individual curb segments can be characterized by their legal status (e.g., temporarily unavailable, available after a certain time of day, and/or the like), and/or other pertinent information.

Live parking space occupancy 260 can be updated whenever one of the agents (e.g., agent 202) communicates new data, including data about segments previously not sensed and/or an update about segments sensed at earlier times. In some implementations, agents can send updates to fleet server 250 at a rate at which new data is generated by the perception modules of the respective agents, e.g., every 0.1 sec, every 0.2 sec, and/or the like. In some implementations, the perception data can first be aggregated on agent's side and communicated to fleet server 250 less frequently, e.g., every 5 sec, every 10 sec, every 30 sec, and/or the like, to save the communication and fleet server's data processing bandwidth. In some implementations, the signals communicated from the agents can include data related to new parking spaces and/or curb segments sensed by the agent and data related to previously sensed spaces/segments for which a different view has been acquired since the last update, e.g., as a result of the agent's motion, and not include data collected during earlier times. In some implementations, in addition to performing parking space occupancy aggregation 254, fleet server 250 can use the data received from one or more agents to update a stored parking space map 256.

Parking space map 256 and live parking space occupancy 260 can be used by parking space availability prediction 270 to predict availability of parking at various locations in the driving environment. An additional input into parking space availability prediction 270 can include historical parking space occupancy 262, e.g., as detected during previous driving missions of the vehicles of the fleet. As illustrated with the dashed arrow in **FIG. 2,** historical parking space occupancy 262 can be updated based on live parking space occupancy 260 and new data received by fleet server 250, e.g., continuously or at regular time intervals, e.g., every hour, every day, and/or the like. Further input into parking space availability prediction 270 can include historical parking success rate 264 for various parking spaces and/or curb segments. Any or both of historical parking space occupancy 262 and/or historical parking success rate 264 can be used to estimate how likely a parking space (or parking spaces in the same or similar neighborhood) that is currently available is to remain available, or be taken away by other vehicles, by the time a fleet vehicle reaches that space. Because a typical fleet of vehicles can jointly observe significantly more parking spaces within any given time interval (e.g., one hour, one day) than a number of times the vehicles of the fleet are parked during the same time interval, it can be expected that historical parking space occupancy 262 is initially more statistically representative-than the historical parking success rate 264-of the probability that a given parking space is to remain available. Correspondingly, historical parking space occupancy 262 data can be given more weight during initial predictions of parking space availability. With time, as fleet server 250 collects more statistics about many fleet vehicles attempting to park in various specific locations of a driving environment, historical parking success rate 264 can become progressively more accurate and can then be given more weight in parking space availability prediction 270.

In some implementations, historical parking space occupancy 262 and/or historical parking success rate 264 can be subdivided into multiple sub-categories associated with specific time of day, e.g., 6-8 am, 10 am-1 pm, 5-7 pm, and/or the like, specific days of the week (e.g., Mon-Fri, Sat-Sun, holidays, and/or the like), with the occupancy/success rate being collected separately for such sub-categories. In some implementations, the occupancy/success rate can also be collected separately for instances where an event (e.g., a sports game, concert, etc.) is happening in the area and for instances where no event is taking place, and/or the like.

In those instances where one or more fleet vehicles are about to park, e.g., following completion of a driving mission with no immediate next mission scheduled, parking space availability prediction 270 can evaluate several metrics to select one or more prospective parking spaces for the fleet vehicle(s). In one illustrative example, the metrics can include a historical availability

HA of a candidate parking space. For example, historical availability HA can include a historical success rate SR of parking in the prospective parking space (e.g., measured in percents or some other suitable units) and/or historical occupancy O of the prospective parking space, e.g., the fraction of time the space has been observed as occupied (e.g., also measured in percents). In some implementations, the historical availability can be a combination of the historical success rate and the historical occupancy,

$$ HA = w_{SR} \cdot SR - w_O \cdot O, $$

with $w_{SR}$ and $w_O$ indicating some empirical parameters (weights) assigned to the two metrics based on field testing. In some implementations, a historical vacancy V of the candidate parking space, e.g., the fraction of time the space has been observed available can be used in lieu of the historical occupancy O,

$$ HA = w_{SR} \cdot SR + w_V \cdot V. $$

In some implementations, the metrics can further include a driving distance D or estimated driving time T to the prospective parking space. The estimated driving time can be computed using a speed of traffic for current conditions. In some implementations, the metrics can further include a number S of other known (sensed) available parking spaces within some maximum driving distance $D_0$ (or maximum driving time $T_0$) from the candidate parking space or a length of the known available curb segments large enough to park the vehicle within the maximum distance (driving time), so that the vehicle can be rerouted to such spaces/segments if the candidate parking space is no longer available. Correspondingly, the likelihood function LF characterizing a candidate parking space can be computed as a weighted combination of various such metrics, e.g.,

$$ LF = w_{HA} \cdot HA - w_D \cdot D + w_S \cdot S, $$

with $w_{HA}$, $w_D$, and $w_S$ being some empirical weights assigned to the corresponding metrics. A parking space having the highest likelihood function LF can be selected for the vehicle. In some implementations, various additional metrics can be used in a similar manner to HA, D, S, including but not limited to a density of the traffic near the prospective parking space, a distance from the prospective parking space to a likely starting area for the next driving mission, and/or the like. The parking space availability prediction 270 can select, based on the likelihood function, an optimal candidate parking space for the vehicle and communicate fleet instructions 280 that instruct a corresponding fleet vehicle 290 to route to the selected parking space. Similar process can be followed for any number of fleet vehicles 290.

One or more fleet vehicles 290 can travel to and attempt to park at the parking spaces selected by fleet server 250. Fleet vehicle(s) can then report back to fleet server 250 whether the parking attempt was successful or unsuccessful, and fleet server 250 can update the historical parking success rate 264 for the parking space. In those instances where the parking attempt is unsuccessful, fleet server 250 can identify another optimal parking space for the fleet vehicle 290 given the vehicle's current location.

Any fleet vehicle 290 operating as a fleet agent and responding to instructions from fleet server 250 and driving to the selected parking space can provide any of the above-described signals to fleet server 250, e.g., parked object detection signal 220, curb visibility signal 230, parking space status detection signal 240, and/or the like, to fleet server 250. In some implementations, when a fleet vehicle 290 follows parking instructions from fleet server 250 detects an available parking space that is different from the selection of fleet server 250, the vehicle's own planning module 134 (with reference to **FIG. 1**) can override the fleet server's instructions by abandoning the route to the parking space selected by fleet server 250 and parking at the detected available parking space.

Computations associated with parking space occupancy aggregation 254, live parking space occupancy 260, parking space availability prediction 270 and/or other systems and modules of fleet server 250 can be supported by a suitable processor 258 responsive to instructions stored in system memory 257.

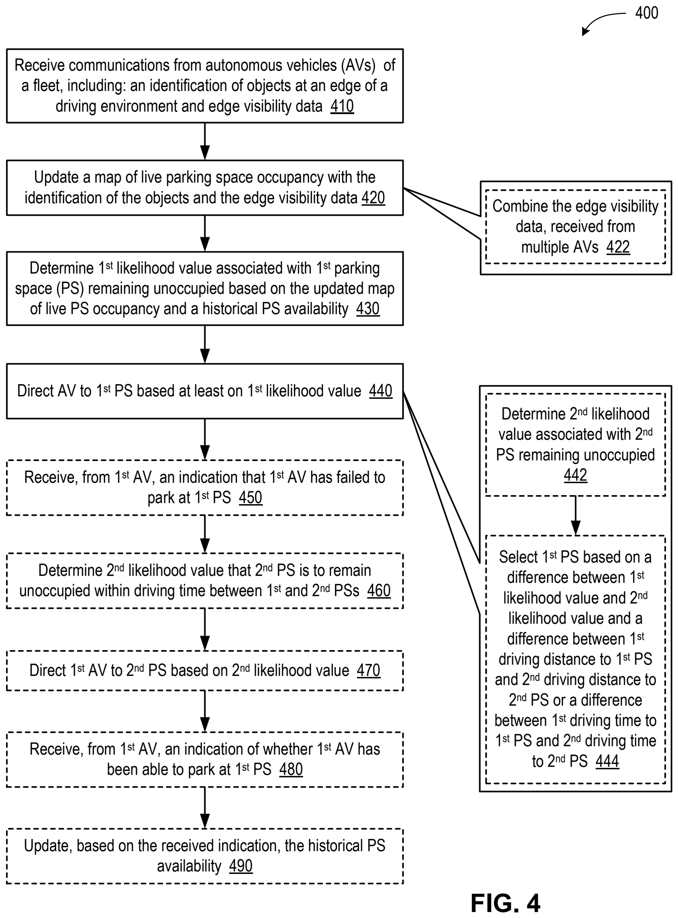

**FIGs. 4-5** illustrates example methods 400-500 of tracking and predicting live availability of parking resources by a fleet of vehicles, in accordance with some implementations of the present disclosure. Although, for the sake of specificity, operations of methods 400-500 are illustrated in conjunction with parking resources, similar operations can be used for tracking and predicting live availability of other shared resources, including but not limited to charging stations, and/or the like. A processing device, having one or more processing units (CPUs), one or more graphics processing units (GPUs), one or more parallel processing units (PPUs) and memory devices communicatively coupled to the CPU(s), GPU(s), and/or PPU(s) can perform method 400 and/or method 500 and/or each of its individual functions, routines, subroutines, or operations. Method 400 and/or method 500 can be directed to systems and components of a vehicle. In some implementations, the vehicle can be an autonomous vehicle. In some implementations, the vehicle can be a driver-operated vehicle equipped with driver-assistance systems, e.g., Level 2 or Level 3 driver assistance systems, that provide limited assistance with specific vehicle functions (e.g., steering, braking, acceleration, etc. systems) or under limited driving conditions (e.g., highway driving). Method 400 and/or method 500 can be executed by a suitable processing device or multiple processing devices. In certain implementations, a single processing thread can perform method 400 and/or method 500. Alternatively, two or more processing threads can perform method 400 and/or method 500, each thread executing one or more individual functions, routines, subroutines, or operations of the method. In an illustrative example, the processing threads implementing method 400 and/or method 500 can be synchronized (e.g., using semaphores, critical sections, and/or other thread synchronization mechanisms). Alternatively, the processing threads implementing method 400 and/or method 500 can be executed asynchronously with respect to each other. Some operations of method 400 and/or method 500 can be performed in a different order compared with the order shown in **FIGs. 4-5.** Some operations of method 400 and/or method 500 can be performed concurrently with other operations. Some operations can be optional.

**FIG. 4** illustrates an example method 400 of tracking and predicting live availability of parking resources performed by a fleet server of a fleet of autonomous vehicles, in accordance with some implementations of the present disclosure. Operations of method 400 can be performed using system memory 257 and processor 258 of fleet server 250, in some implementations.

At block 410, method 400 can include receiving a plurality of communications (e.g., curb occupancy data 135 in **FIG. 1**). Each of the plurality of communications can be received from a respective autonomous vehicle of a fleet of autonomous vehicles and can include an identification of one or more objects (e.g., bounding shapes 341, 343, 345, etc., in **FIG. 3**) located at an edge of a drivable portion of a driving environment (e.g., as part of parked object detection signal 220 in **FIG. 2**). In some implementations, each of the plurality of communications can further include edge visibility data (e.g., curb visibility signal 230 in **FIG. 2**) representative of visibility of the edge of the drivable portion of the driving environment from a sensing system of the respective autonomous vehicle (e.g., visibility of parking space 320-9 from the sensing system of agent 310). In some implementations, the sensing system of the respective autonomous vehicle can include one or more lidar sensors, one or more radar sensors, and/or one or more camera sensors.

At block 420, method 400 can include updating a map of live parking space occupancy (e.g., live parking space occupancy 260 in **FIG. 2**) for the driving environment with at least the identification of the one or more objects and the edge visibility data. In some implementations, as illustrated with the top callout block 422, updating the map of live parking space occupancy can include, combining the edge visibility data, representative of a same segment of the edge, received from multiple autonomous vehicles of the fleet (e.g., as part of parking space occupancy aggregation 254, with reference to **FIG. 2**).

At block 430, method 400 can continue with determining a first likelihood value (e.g., value of a likelihood function, as disclosed in conjunction with **FIG. 2**) associated with a first parking space in the driving environment remaining unoccupied within a target time based at least on the updated map of live parking space occupancy and a historical parking space availability in the driving environment. In some implementations, the target time can be the time of travel between the current location of the autonomous vehicle and the first parking space. In some implementations, the historical parking space availability can include a historical parking space occupancy (e.g., historical parking space occupancy 262 in **FIG. 2**) of a plurality of parking spaces that includes the first parking space. In some implementations, the historical parking space availability can include a historical parking success rate (e.g., parking success rate 264 in **FIG. 2**) associated with the first parking space.

At block 440, method 400 can include directing the first autonomous vehicle of the fleet to the first parking space based at least on the first likelihood value. In some implementations, directing the first autonomous vehicle to the first parking space can include operations of the bottom callout portion of **FIG. 3**. More specifically, at block 442, method 400 can include determining a second likelihood value associated with a second parking space in the driving environment remaining unoccupied within the target time based at least on the updated map of live parking space occupancy and the historical parking space availability. At block 444, method 400 can include selecting the first parking space based on a difference between the first likelihood value and the second likelihood value. In some implementations, selecting the first parking space can be further based on a difference between a first driving distance to the first parking space and a second driving distance to the second parking space or a difference between a first driving time to the first parking space and a second driving time to the second parking space. For example, a parking space characterized by a higher likelihood value can be selected. In some implementations, directing the first autonomous vehicle to the first parking space can be further based on an amount of alternative parking within at least one of a target distance or a target driving time from the first parking space (e.g., a number other known available parking spaces, a length of the known available curb segments large enough to park the vehicle, etc., within some maximum driving distance or maximum driving time from the first parking space).

In some implementations, at block 450, method 400 can include receiving, from the first autonomous vehicle, an indication that the first autonomous vehicle has failed to park at the first parking space. At block 460, method 400 can continue with determining a second likelihood value associated with a second parking space in the driving environment remaining unoccupied within a driving time between the first parking space and the second parking space. At block 470, method 400 can continue with directing the first autonomous vehicle to the second parking space based at least on the second likelihood value. At block 480, method 400 can include receiving, from the first autonomous vehicle, an indication of whether the first autonomous vehicle has been able to park at the first parking space and, at block 490, updating, based on the received indication, the historical parking space availability in the driving environment.

In some implementations, operations of any of blocks 440-490 can be performed to identify parking spaces for multiple autonomous vehicles (e.g., second autonomous vehicle, third autonomous vehicle, and so on) and direct those autonomous vehicles to the respective identified parking spaces.

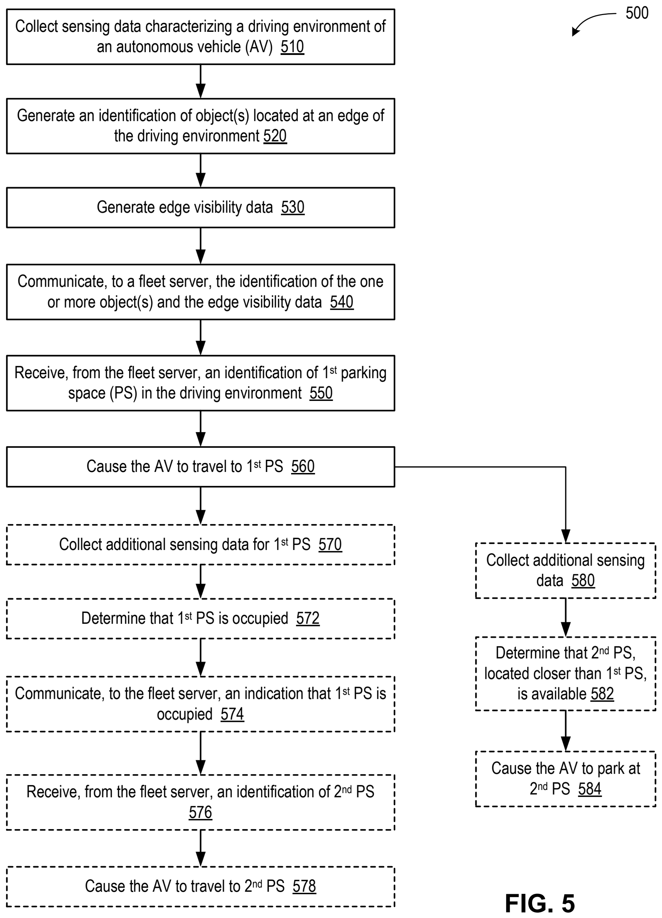

**FIG. 5** illustrates an example method 500 of tracking and predicting live availability of parking resources performed by an autonomous vehicle of a fleet of autonomous vehicles, in accordance with some implementations of the present disclosure. Operations of method 400 can be performed using various components and modules of AV 100 of **FIG. 1.**

At block 510, method 500 can include collecting, using a sensing system (e.g., sensing system 110 in **FIG. 1**) of an AV (e.g., AV 100 in **FIG. 1**), sensing data characterizing a driving environment of the AV.

At block 520, method 500 can include using a data processing system (e.g., data processing system 120 in **FIG. 1**) of the AV to generate, using the sensing data, an identification of one or more objects located at an edge of a drivable portion of the driving environment (e.g., parked object detection signal 220 in **FIG. 2**).

At block 530, method 500 can include using the data processing system of the AV to generate edge visibility data representative of visibility of the edge of the drivable portion of the driving environment (e.g., curb visibility signal 230 in **FIG. 2**).

At block 540, method 500 can continue with communicating to a fleet server (e.g., fleet server 250 in **FIG. 2**), via a transceiver of the AV, at least the identification of the one or more objects and the edge visibility data.

At block 550, method 500 can include receiving from the fleet server, via the transceiver of an identification of a first parking space in the driving environment.

At block 560, method 500 can continue with causing, using a vehicle control system of the AV (e.g., VCS 140 in **FIG. 1**), the AV to travel to the first parking space.

In some implementations, method 500 can include operations illustrated with blocks 570-578. More specifically, at block 570, method 500 can include collecting additional sensing data for the first parking space. At block 572, method 500 can include determining, using the perception system of the AV and based on the additional sensing data, that the first parking space is occupied. At block 574, method 500 can include communicating to the fleet server, using the transceiver of the AV, an indication that the first parking space is occupied. At block 576, method 500 can include receiving from the fleet server, via the transceiver of the AV, an identification of a second parking space in the driving environment. At block 578, method 500 can include causing, using the vehicle control system of the AV, the AV to travel to the second parking space.

In some implementations, method 500 can include operations illustrated with blocks 580-584. More specifically, at block 580, method 500 can include collecting, using the sensing system of the AV, additional sensing data characterizing the driving environment of the autonomous vehicle. At block 582, method 500 can continue with determining, using the data processing system and based on the additional sensing data, that a second parking space is available, wherein the second parking space is located closer to the autonomous vehicle than the first parking space. At block 584, method 500 can include causing, using the vehicle control system of the AV, to park the AV at the second parking space.

In some implementations, the techniques disclosed herein can also be used for tracking and verifying availability of parking spaces in parking lots, e.g., a depot of a fleet of autonomous vehicles. In such implementations, although a fleet server can know the locations of various vehicles of the fleet, such knowledge may not guarantee a knowledge of which parking spaces of the depot are occupied and which parking spaces are available since non-fleet vehicles can be parked in some spaces of the depot. In such instances, the disclosed techniques can be used to collect sensing data from autonomous vehicles driving around the depot, e.g., prior to beginning of a first mission, returning to the depot between missions, and/or the like. The collected sensing data can include identification of objects (e.g., other vehicles) parking at various parking spaces and/or curb visibility data, where "curb" in this context should be understood as any physical object(s) indicating bounds of (individual or collective) parking spaces of the depot, markings, signs, and/or other indications of the parking spaces. Identification of parking spaces available for parking one or more vehicles of the fleet can be performed substantially as disclosed above, e.g., in conjunction with methods 400 and 500 illustrated with **FIGs. 4** and **5.**

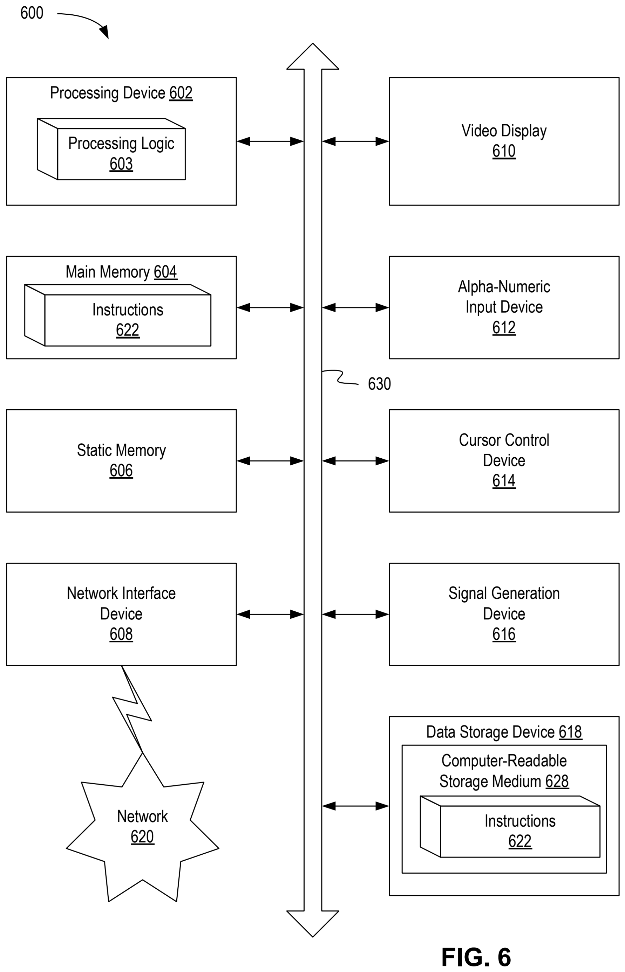

**FIG. 6** depicts a block diagram of an example computer device 600 capable of tracking and predicting live availability of parking resources performed by a fleet server of a fleet of autonomous vehicles, in accordance with some implementations of the present disclosure. Example computer device 600 can be connected to other computer devices in a LAN, an intranet, an extranet, and/or the Internet. Computer device 600 can operate in the capacity of a server in a client-server network environment. Computer device 600 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 600 can include a processing device 602 (also referred to as a processor or CPU), a main memory 604 (e.g., read-only memory (ROM), flash memory, dynamic random access memory (DRAM) such as synchronous DRAM (SDRAM), etc.), a static memory 606 (e.g., flash memory, static random access memory (SRAM), etc.), and a secondary memory (e.g., a data storage device 618), which can communicate with each other via a bus 630. In some implementations, processing device 602 may be or include processor 128 of **FIGs. 1** and **2** or processor 258 of **FIG. 2** and main memory 604 can be or include system memory 126 in **FIGs. 1** and **2,** or system memory 257 of **FIG. 2.**

Processing device 602 (which can include processing logic 603) represents one or more general-purpose processing devices such as a microprocessor, central processing unit, or the like. More particularly, processing device 602 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 602 can also be one or more special-purpose processing devices such as an application specific integrated circuit (ASIC), a field programmable gate array (FPGA), a digital signal processor (DSP), network processor, or the like. In accordance with one or more aspects of the present disclosure, processing device 602 can be configured to execute instructions performing methods 400-500 of tracking and predicting live availability of parking resources by a fleet of vehicles.

Example computer device 600 can further include a network interface device 608, which can be communicatively coupled to a network 620. Example computer device 600 can further comprise a video display 610 (e.g., a liquid crystal display (LCD), a touch screen, or a cathode ray tube (CRT)), an alphanumeric input device 612 (e.g., a keyboard), a cursor control device 614 (e.g., a mouse), and an acoustic signal generation device 616 (e.g., a speaker).

Data storage device 618 can include a computer-readable storage medium (or, more specifically, a non-transitory computer-readable storage medium) 628 on which is stored one or more sets of executable instructions 622. In accordance with one or more aspects of the present disclosure, executable instructions 622 can comprise executable instructions performing methods 400-500 of tracking and predicting live availability of parking resources by a fleet of vehicles.

Executable instructions 622 can also reside, completely or at least partially, within main memory 604 and/or within processing device 602 during execution thereof by example computer device 600, main memory 604 and processing device 602 also constituting computer-readable storage media. Executable instructions 622 can further be transmitted or received over a network via network interface device 608.

While the computer-readable storage medium 628 is shown in **FIG. 6** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "storing," "adjusting," "causing," "returning," "comparing," "creating," "stopping," "loading," "copying," "throwing," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

The specification includes the following subject-matter expressed in the form of clauses 1-20.

1. A system comprising:

a memory device; and
a processing device communicatively coupled to the memory device, to:
receive a plurality of communications, each of the plurality of communications received from a respective autonomous vehicle of a fleet of autonomous vehicles and comprising at least:

an identification of one or more objects located at an edge of a drivable portion of a driving environment, and
edge visibility data representative of visibility of the edge of the drivable portion of the driving environment from a sensing system of the respective autonomous vehicle;
update a map of live parking space occupancy for the driving environment with at least the identification of the one or more objects and the edge visibility data;
determine, based at least on the updated map of live parking space occupancy and a historical parking space availability in the driving environment, a first likelihood value associated with a first parking space in the driving environment remaining unoccupied within a target time; and
direct a first autonomous vehicle of the fleet to the first parking space based at least on the first likelihood value.

2. The system of clause 1, wherein the sensing system of the respective autonomous vehicle comprises at least one of:

one or more lidar sensors;
one or more radar sensors, or
one or more camera sensors.

3. The system of clause 1 or 2, wherein to update the map of live parking space occupancy, the processing device is to:
combine the edge visibility data, representative of a same segment of the edge, received from multiple autonomous vehicles of the fleet.

4. The system of any of clauses 1-3, wherein the historical parking space availability comprises at least one of:

a historical parking space occupancy of a plurality of parking spaces comprising the first parking space, or
a historical parking success rate associated with the first parking space.

5. The system of any of clauses 1-4, wherein to direct the first autonomous vehicle to the first parking space, the processing device is to:

determine a second likelihood value associated with a second parking space in the driving environment remaining unoccupied within the target time; and
select the first parking space based on a difference between the first likelihood value and the second likelihood value and at least one of:

a difference between a first driving distance to the first parking space and a second driving distance to the second parking space, or
a difference between a first driving time to the first parking space and a second driving time to the second parking space.

6. The system of any of clauses 1-4, wherein the processing device is to direct the first autonomous vehicle to the first parking space further based on an amount of alternative parking within at least one of a target distance or a target driving time from the first parking space.

7. The system of any of clauses 1-4, wherein the processing device is further to:

receive, from the first autonomous vehicle, an indication that the first autonomous vehicle has failed to park at the first parking space;
determine a second likelihood value associated with a second parking space remaining unoccupied within a driving time between the first parking space and the second parking space; and
direct the first autonomous vehicle to the second parking space based at least on the second likelihood value.

8. The system of any of clauses 1-4, wherein the processing device is further to:

determine a second likelihood associated with a second parking space remaining unoccupied within a second target time based at least on the updated map of live parking space occupancy and the historical parking space availability in the driving environment; and
direct a second autonomous vehicle of the fleet to the second parking space based at least on the second likelihood value.

9. The system of any of clauses 1-8, wherein the processing device is further to:

receive, from the first autonomous vehicle, an indication of whether the first autonomous vehicle has been able to park at the first parking space; and
update, based on the received indication, the historical parking space availability in the driving environment.

10. An autonomous vehicle comprising:

a sensing system to collect sensing data characterizing a driving environment of the autonomous vehicle;
a data processing system to generate, using the sensing data, at least:

an identification of one or more objects located at an edge of a drivable portion of the driving environment, and
edge visibility data representative of visibility of the edge of the drivable portion of the driving environment;
a transceiver to:

communicate, to a fleet server, at least the identification of the one or more objects and the edge visibility data; and receive, from the fleet server, an identification of a first parking space in the driving environment; and a vehicle control system to cause the autonomous vehicle to travel to the first parking space.

11. The autonomous vehicle of clause 10, wherein the sensing system comprises at least one of:

one or more lidar sensors;
one or more radar sensors, or
one or more camera sensors.

12. The autonomous vehicle of clause 10 or 11, wherein the sensing system is further to:
collect additional sensing data for the first parking space;
wherein the data processing system is to:
determine, based on the additional sensing data, that the first parking space is occupied;
wherein the transceiver is further to:

communicate, to the fleet server, an indication that the first parking space is occupied; and receive, from the fleet server, an identification of a second parking space in the driving environment; and

wherein the vehicle control system is further to:
cause the autonomous vehicle to travel to the second parking space.

13. The autonomous vehicle of any of clauses 10-12, wherein the sensing system is further to:
collect additional sensing data characterizing the driving environment of the autonomous vehicle;
wherein the data processing system is to:
determine, based on the additional sensing data, that a second parking space is available, wherein the second parking space is located closer to the autonomous vehicle than the first parking space; and
wherein the vehicle control system is further to:
cause the autonomous vehicle to park at the second parking space.

14. A fleet of vehicles, comprising:
a plurality of vehicles, each of the plurality of vehicles to:

collect, using a sensing system of a respective vehicle of the plurality of vehicles, sensing data characterizing a driving environment of the respective vehicle;
generate, using a data processing system of the respective vehicle and the sensing data, curb occupancy data that comprises at least:

an identification of one or more objects located at a curb in the driving environment, and
curb visibility data representative of visibility of the curb in the driving environment; and a processing device to:

update a map of live parking space occupancy with the curb occupancy data generated by the plurality of vehicles;
determine, based at least on the updated map of live parking space occupancy and a historical parking space availability in the driving environment, a first likelihood value associated with a first parking space remaining unoccupied within a target time; and
direct a first vehicle of the plurality of vehicles to the first parking space based at least on the first likelihood value;
wherein the first vehicle of the plurality of vehicles is to:
travel to the first parking space.

15. The fleet of vehicles of clause 14, wherein the sensing system of the respective vehicle comprises at least one of:

one or more lidar sensors;
one or more radar sensors, or
one or more camera sensors.

16. The fleet of vehicles of clause 14 or 15, wherein to update the map of live parking space occupancy, the processing device is to:
combine the curb occupancy data, representative of a same segment of the curb, received from multiple vehicles of the plurality of vehicles.

17. The fleet of vehicles of any of clauses 14-16, wherein the historical parking space availability comprises at least one of:

a historical parking space occupancy of a plurality of parking spaces comprising the first parking space, or
a historical parking success rate associated with the first parking space.

18. The fleet of vehicles of any of clauses 14-17, wherein to direct the first vehicle to the first parking space, the processing device is to:

determine a second likelihood value associated with a second parking space in the driving environment associated with the second parking space remaining unoccupied withing the target time; and

select the first parking space based on a difference between the first likelihood value and the second likelihood value and at least one of:

a difference between a first driving distance, for the first vehicle, to the first parking space and a second driving distance to the second parking space, or

a difference between a first driving time, for the first vehicle, to the first parking space and a second driving time to the second parking space.

19. The fleet of vehicles of any of clauses 14-17, wherein the first vehicle is further to:

collect, using the sensing system of the first vehicle, additional sensing data for the first parking space; and

determine, by processing the additional sensing data using the data processing system of the first vehicle, that the first parking space is occupied;

wherein processing device is to:

receive, from the first vehicle, an indication that the first parking space is occupied;

determine a second likelihood value associated with a second parking space remaining unoccupied within a driving time between the first parking space and the second parking space; and

direct the first vehicle to the second parking space based at least on the second likelihood value.

20. The fleet of vehicles of any of clauses 14-17, wherein the first vehicle is further to:

collect, using the sensing system of the first vehicle, additional sensing data;

determine, by processing the additional sensing data using the data processing system of the first vehicle, that a second parking space is available, wherein the second parking space is located closer to the first vehicle than the first parking space; and

travel to the second parking space.

**Claims**

1. A system comprising:

a memory device; and
a processing device communicatively coupled to the memory device, to:

receive a plurality of communications, each of the plurality of communications received from a respective autonomous vehicle of a fleet of autonomous vehicles and comprising at least:

an identification of one or more objects located at an edge of a drivable portion of a driving environment, and edge visibility data representative of visibility of the edge of the drivable portion of the driving environment from a sensing system of the respective autonomous vehicle;

update a map of live parking space occupancy for the driving environment with at least the identification of the one or more objects and the edge visibility data; determine, based at least on the updated map of live parking space occupancy and a historical parking space availability in the driving environment, a first likelihood value associated with a first parking space in the driving environment remaining unoccupied within a target time; and direct a first autonomous vehicle of the fleet to the first parking space based at least on the first likelihood value.

2. The system of claim 1, wherein the sensing system of the respective autonomous vehicle comprises at least one of:

one or more lidar sensors;
one or more radar sensors, or
one or more camera sensors.

3. The system of claim 1 or 2, wherein to update the map of live parking space occupancy, the processing device is to:
combine the edge visibility data, representative of a same segment of the edge, received from multiple autonomous vehicles of the fleet.

4. The system of any of claims 1-3, wherein the historical parking space availability comprises at least one of:

a historical parking space occupancy of a plurality of parking spaces comprising the first parking space, or
a historical parking success rate associated with the first parking space.

**5.** The system of any of claims 1-4, wherein to direct the first autonomous vehicle to the first parking space, the processing device is to:

determine a second likelihood value associated with a second parking space in the driving environment remaining unoccupied within the target time; and
select the first parking space based on a difference between the first likelihood value and the second likelihood value and at least one of:

a difference between a first driving distance to the first parking space and a second driving distance to the second parking space, or
a difference between a first driving time to the first parking space and a second driving time to the second parking space.

**6.** The system of any of claims 1-4, wherein the processing device is to direct the first autonomous vehicle to the first parking space further based on an amount of alternative parking within at least one of a target distance or a target driving time from the first parking space.

**7.** The system of any of claims 1-4, wherein the processing device is further to:

receive, from the first autonomous vehicle, an indication that the first autonomous vehicle has failed to park at the first parking space;
determine a second likelihood value associated with a second parking space remaining unoccupied within a driving time between the first parking space and the second parking space; and
direct the first autonomous vehicle to the second parking space based at least on the second likelihood value.

**8.** The system of any of claims 1-4, wherein the processing device is further to:

determine a second likelihood associated with a second parking space remaining unoccupied within a second target time based at least on the updated map of live parking space occupancy and the historical parking space availability in the driving environment; and
direct a second autonomous vehicle of the fleet to the second parking space based at least on the second likelihood value.

**9.** The system of any of claims 1-8, wherein the processing device is further to:

receive, from the first autonomous vehicle, an indication of whether the first autonomous vehicle has been able to park at the first parking space; and
update, based on the received indication, the historical parking space availability in the driving environment.

**10.** An autonomous vehicle comprising:

a sensing system to collect sensing data characterizing a driving environment of the autonomous vehicle;
a data processing system to generate, using the sensing data, at least:

an identification of one or more objects located at an edge of a drivable portion of the driving environment, and
edge visibility data representative of visibility of the edge of the drivable portion of the driving environment;
a transceiver to:

communicate, to a fleet server, at least the identification of the one or more objects and the edge visibility data; and
receive, from the fleet server, an identification of a first parking space in the driving environment; and
a vehicle control system to cause the autonomous vehicle to travel to the first parking space.

**11.** The autonomous vehicle of claim 10, wherein the sensing system comprises at least one of:

one or more lidar sensors;
one or more radar sensors, or
one or more camera sensors.

**12.** The autonomous vehicle of claim 10 or 11, wherein the sensing system is further to:
collect additional sensing data for the first parking space;

wherein the data processing system is to:
determine, based on the additional sensing data, that the first parking space is occupied;
wherein the transceiver is further to:

communicate, to the fleet server, an indication that the first parking space is occupied; and
receive, from the fleet server, an identification of a second parking space in the driving environment; and

wherein the vehicle control system is further to:

cause the autonomous vehicle to travel to the second parking space.

**13.** The autonomous vehicle of any of claims 10-12, wherein the sensing system is further to:
collect additional sensing data characterizing the driving environment of the autonomous vehicle;

wherein the data processing system is to:
determine, based on the additional sensing data, that a second parking space is available, wherein the second parking space is located closer to the autonomous vehicle than the first parking space; and
wherein the vehicle control system is further to:
cause the autonomous vehicle to park at the second parking space.

**14.** A fleet of vehicles, comprising:
a plurality of vehicles, each of the plurality of vehicles to:

collect, using a sensing system of a respective vehicle of the plurality of vehicles, sensing data characterizing a driving environment of the respective vehicle;
generate, using a data processing system of the respective vehicle and the sensing data, curb occupancy data that comprises at least:

an identification of one or more objects located at a curb in the driving environment, and
curb visibility data representative of visibility of the curb in the driving environment; and
a processing device to:

update a map of live parking space occupancy with the curb occupancy data generated by the plurality of vehicles;
determine, based at least on the updated map of live parking space occupancy and a historical parking space availability in the driving environment, a first likelihood value associated with a first parking space remaining unoccupied within a target time; and
direct a first vehicle of the plurality of vehicles to the first parking space based at least on the first likelihood value;
wherein the first vehicle of the plurality of vehicles is to:
travel to the first parking space.

**15.** The fleet of vehicles of claim 14,

wherein to update the map of live parking space occupancy, the processing device is to:
combine the curb occupancy data, representative of a same segment of the curb, received from multiple vehicles of the plurality of vehicles;
or wherein to direct the first vehicle to the first parking space, the processing device is to:

determine a second likelihood value associated with a second parking space in the driving environment associated with the second parking space remaining unoccupied withing the target time; and
select the first parking space based on a difference between the first likelihood value and the second likelihood value and at least one of:

a difference between a first driving distance, for the first vehicle, to the first parking space and a second driving distance to the second parking space, or
a difference between a first driving time, for the first vehicle, to the first parking space and a second driving time to the second parking space.

100

Driving Environment
101

Sensing System 110

| Lidar 112 | Radar 114 | Audio Sensor 116 | Camera(s) 118 | IR Sensor(s) 119 |

Positional Subsystem 122 | Roadgraph Info 124 | System Memory 126 | Processor 128

Perception and Planning 130

Perception 132

Planner 134

Curb Occupancy Data 135

Parking Instructions 138

Agent-Server Communication 136

Data Processing System 120

Vehicle Control System (VCS) 140

Powertrain, Brakes & Steering 150

Vehicle Electronics 160

Signaling 170

FIG. 1

**FIG. 2**

**FIG. 3**

400

Receive communications from autonomous vehicles (AVs) of a fleet, including: an identification of objects at an edge of a driving environment and edge visibility data 410

↓

Update a map of live parking space occupancy with the identification of the objects and the edge visibility data 420

Combine the edge visibility data, received from multiple AVs 422

↓

Determine 1st likelihood value associated with 1st parking space (PS) remaining unoccupied based on the updated map of live PS occupancy and a historical PS availability 430

↓

Direct AV to 1st PS based at least on 1st likelihood value 440

Determine 2nd likelihood value associated with 2nd PS remaining unoccupied 442

↓

Select 1st PS based on a difference between 1st likelihood value and 2nd likelihood value and a difference between 1st driving distance to 1st PS and 2nd driving distance to 2nd PS or a difference between 1st driving time to 1st PS and 2nd driving time to 2nd PS 444

↓

Receive, from 1st AV, an indication that 1st AV has failed to park at 1st PS 450

↓

Determine 2nd likelihood value that 2nd PS is to remain unoccupied within driving time between 1st and 2nd PSs 460

↓

Direct 1st AV to 2nd PS based on 2nd likelihood value 470

↓

Receive, from 1st AV, an indication of whether 1st AV has been able to park at 1st PS 480

↓

Update, based on the received indication, the historical PS availability 490

**FIG. 4**

500

Collect sensing data characterizing a driving environment of an autonomous vehicle (AV) 510

↓

Generate an identification of object(s) located at an edge of the driving environment 520

↓

Generate edge visibility data 530

↓

Communicate, to a fleet server, the identification of the one or more object(s) and the edge visibility data 540

↓

Receive, from the fleet server, an identification of 1st parking space (PS) in the driving environment 550

↓

Cause the AV to travel to 1st PS 560

↓

Collect additional sensing data for 1st PS 570

↓

Determine that 1st PS is occupied 572

↓

Communicate, to the fleet server, an indication that 1st PS is occupied 574

↓

Receive, from the fleet server, an identification of 2nd PS 576

↓

Cause the AV to travel to 2nd PS 578

Collect additional sensing data 580

↓

Determine that 2nd PS, located closer than 1st PS, is available 582

↓

Cause the AV to park at 2nd PS 584

**FIG. 5**

600

Processing Device 602

Processing Logic
603

Main Memory 604

Instructions
622

Static Memory
606

Network Interface
Device
608

Network
620

630

Video Display
610

Alpha-Numeric
Input Device
612

Cursor Control
Device
614

Signal Generation
Device
616

Data Storage Device 618

Computer-Readable
Storage Medium 628

Instructions
622

**FIG. 6**